(19) Europäisches Patentamt

European Patent Office

Office européen des brevets

(11) **EP 1 197 326 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(51) Int Cl.:
*B32B 27/36* (2006.01)   *C08J 5/18* (2006.01)
*C08L 67/02* (2006.01)

(21) Anmeldenummer: **01122695.8**

(22) Anmeldetag: **01.10.2001**

(54) **Matte, pigmentierte, biaxial orientierte Polyesterfolie**

Mat, pigmented biaxially oriented polyester foil

Film polyester, mat, à orientation biaxiale, pigmenté

(84) Benannte Vertragsstaaten:
**DE FR GB IT LU**

(30) Priorität: **14.10.2000 DE 10051084**

(43) Veröffentlichungstag der Anmeldung:
**17.04.2002 Patentblatt 2002/16**

(73) Patentinhaber: **Mitsubishi Polyester Film GmbH**
**65203 Wiesbaden (DE)**

(72) Erfinder:
• **Crass, Günther**
  **65232 Taunusstein (DE)**
• **Hilkert, Gottfried, Dr.**
  **55291 Saulheim (DE)**
• **Pfeiffer, Herbert, Dr. Professor**
  **55126 Mainz (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 377 495**          **EP-A- 0 976 548**
**US-A- 3 154 461**          **US-A- 4 990 400**
**US-A- 5 073 435**

**Beschreibung**

Die Erfindung betrifft eine matte, biaxial orientierte Polyesterfolie, die mindestens eine matte Basisschicht (B) enthält, die zu mindestens 70 Gew.-% aus einem thermoplastischen Polyester besteht. Die Erfindung betrifft weiterhin ein Verfahren für die Herstellung der Folie und ihre Verwendung.

Die erfindungsgemäße Folie zeichnet sich durch charakteristische matte Oberflächen aus und ist für die Verwendung als Verpackungsfolie oder für Anwendungen im industriellen Sektor gut geeignet.

Die Verpackungsindustrie hat einen hohen Bedarf an transparenten, hochglänzenden Kunststofffolien, wie z.B. biaxial orientierte Polypropylen- oder biaxial orientierte Polyesterfolien. Daneben besteht in zunehmendem Maße ein Bedarf an solchen Folien, bei denen die Oberflächen nicht hochglänzend sind, sondern sich durch ein charakteristisches mattes Erscheinungsbild auszeichnen und dadurch z.B. der Verpackung ein besonderes attraktives und damit werbewirksames Aussehen verleihen.

In der US 3 154 461 wird ein Verfahren zur Herstellung einer biaxial orientierten Folie aus thermoplastischem Kunststoff (z.B. Polyethylenterephtalat, Polypropylen) mit matter Oberfläche beansprucht, bei dem die Folie inkompressible Partikel (z.B. Calciumcarbonat, Siliciumdioxid) in einer Größe von 0,3 bis 20 $\mu$m und in einer Konzentration von 1 bis 25 % enthält. Weiterhin ist in dieser Anmeldung die matte Folie, hergestellt nach dem erfindungsgemäßen Verfahren, beansprucht. Für viele Anwendungen ist die nach dem erfindungsgemäßen Verfahren hergestellte Folie im Mattgrad verbesserungsbedürftig.

In der DE-A 23 53 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Strecken in senkrecht zueinander verlaufenden Richtungen biaxial orientiert und den Film thermofixiert. Nachteilig an dem Verfahren ist, dass bei der Herstellung der Folie anfallendes Verschnittmaterial (im Wesentlichen ein Gemisch aus Polyesterrohstoff und Ethylen- oder Propylen-Mischpolymer) nicht mehr als Regenerat eingesetzt werden kann, da ansonsten die Folie gelb wird. Das Verfahren ist damit aber unwirtschaftlich und die mit Regenerat produzierte, gelbliche Folie konnte sich am Markt nicht durchsetzen. Bei Erhöhung der Konzentration des Mischpolymeren im Polyester verliert die Folie im Allgemeinen ihren milchigen Charakter und wird weiß mit hoher Opazität.

Die EP-A-0 976 548 beschreibt eine koextrudierte Mehrschichtfolie mit einer Basisschicht (B) und einer matten Außenschicht (A). Die matte Außenschicht (A) entsteht durch Einarbeitung von zwei Komponenten I und II. Die Basisschicht und die Deckschicht(en) können übliche Additive wie Antiblockmittel in üblichen Konzentrationen enthalten.

Aufgabe der vorliegenden Erfindung war es daher, eine matte, biaxial orientierte Polyesterfolie bereitzustellen, die die Nachteile der genannten Folien nach dem Stand der Technik nicht aufweist und sich insbesondere durch einen hohen Mattgrad, einer sehr guten Herstellbarkeit und einer sehr guten Verarbeitbarkeit auszeichnet. Außerdem soll dafür Sorge getragen werden, dass die Folie auch auf schnelllaufenden Verarbeitungsmaschinen verarbeitet werden kann. Bei der Herstellung der Folie soll weiterhin gewährleistet sein, dass bei der Folienherstellung anfallendes Verschnittmaterial als Regenerat in einer Menge von bis zu 70 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden.

Die Aufgabe wird erfindungsgemäß durch eine matte, biaxial orientierte Polyesterfolie mit mindestens einer matten Basisschicht (B) gelöst, die mindestens 70 Gew.-% thermoplastischen Polyester enthält, wobei die Basisschicht (B) zusätzlich ein Pigmentsystem enthält, das durch die folgenden Merkmale gekennzeichnet ist,

a) der mittlere Durchmesser der Pigmentkörner ($d_{50}$-Wert) liegt im Bereich von 2 bis 5 $\mu$m,

b) die Streuung der Verteilung der Korngröße der Pigmentkörner, ausgedrückt durch den SPAN 98, ist kleiner/gleich 1,9 und

c) die Konzentration der Pigmentkörner liegt im Bereich 1,0 bis 10 Gew.-%, bezogen auf das Gesamtgewicht der Folie.

Die Unteransprüche geben bevorzugte Ausführungsformen der Erfindung an, die nachstehend näher erläutert werden.

Erfindungsgemäß ist die Folie vorzugsweise einschichtig aufgebaut und umfasst in diesem Fall als Schicht nur die Basisschicht (B).

Die Basisschicht (B) der Folie enthält bevorzugt mindestens 70 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Basisschicht aus Polyethylenterephtalat-Homopolymer. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für -CH2-, - C$(CH_3)_2$-, -C$(CF_3)_2$-, -O-, -S- oder -SO$_2$- steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenyl-acetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Zur Erzielung der gewünschten Mattheit/des gewünschten Mattgrades enthält die Basisschicht (B) (die Basisschicht (B) ist bei der einschichtigen Ausführungsform mit der Folie gleichzusetzen) zumindest das erfindungsgemäße Pigmentsystem in einer wirksamen Menge von 1,0 bis 10,0 Gew.- %, bezogen auf das Gewicht der Basisschicht (B). In der bevorzugten Ausführungsform der Folie gemäß der vorliegenden Erfindung beträgt die Pigmentkonzentration 1,1 bis 7,5 Gew.-%, besonders bevorzugt 1,2 bis 5,0 Gew.-%.

Typische den Mattgrad der Folie begünstigende Partikelsysteme sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Daneben können auch Mischungen von zwei oder mehreren verschiedenen Partikelsystemen oder Mischungen von Partikelsystemen in gleicher chemischer Zusammensetzung, aber unterschiedlicher Partikelgröße gewählt werden. Die Partikeln können den Polymeren der einzelnen Schichten der Folie in den jeweils vorteilhaften Konzentrationen, z.B. als glykolische Dispersion während der Polykondensation oder über Masterbatche bei der Extrusion zugegeben werden.

Bevorzugte Partikeln sind $SiO_2$ in kolloidaler und in kettenartiger Form. Diese Partikeln werden sehr gut in die Polymermatrix eingebunden.

Es wurde gefunden, dass der Partikeldurchmesser und die Streuung des verwendeten Pigmentsystem entscheidend den Mattgrad und die Herstellung der Folie beeinflussen.

Zur Erzielung eines möglichst hohen Mattgrades (d.h. eines möglichst geringen Glanzes) und zur Erzielung einer guten Herstellbarkeit enthält die Folie gemäß der vorliegenden Erfindung ein Pigmentsystem, bei dem der mittlere Durchmesser der Pigmentkörner (der $d_{50}$-Wert) im Bereich von 2,0 bis 5,0 $\mu$m liegt und die Streuung der Verteilung der Korngröße der Pigmentkörner (ausgedrückt durch den SPAN 98) kleiner/gleich 1,9 ist.

In der bevorzugten Ausführungsform enthält die Folie gemäß der vorliegenden Erfindung ein Pigmentsystem, bei dem der mittlere Durchmesser der Pigmentkörner im Bereich von 2,1 bis 4,9 $\mu$m liegt und die Streuung der Verteilung der Korngröße der Pigmentkörner kleiner/gleich 1,8 ist. In der besonders bevorzugten Ausführungsform enthält die Folie gemäß der vorliegenden Erfindung ein Pigmentsystem, bei dem der mittlere Durchmesser der Pigmentkörner im Bereich von 2,2 bis 4,8 $\mu$m liegt und die Streuung der Verteilung der Korngröße der Pigmentkörner kleiner/gleich 1,7 ist.

Enthält die Folie dagegen ein Pigmentsystem, bei dem der mittlere Durchmesser und die Streuung außerhalb des erfindungsgemäßen Bereiches liegt, so wirkt sich dies nachhaltig negativ auf den Mattgrad und/oder die Herstellbarkeit der Folie aus.

Enthält die Folie dagegen ein Pigmentsystem, bei dem der mittlere Durchmesser größer als 5,0 $\mu$m und die Streuung größer als 1,6 sind, so wird der Mattgrad und die Herstellbarkeit der Folie schlechter. D.h. der Glanz wird in unerwünschtem Maße höher und die Folie neigt bei der Herstellung vermehrt zu Abrissen.

Enthält die Folie dagegen ein Pigmentsystem, bei dem der mittlere Durchmesser der Pigmentkörner kleiner als 2,0 $\mu$m und die Streuung größer als 1,9 sind, so wird ebenfalls der Mattgrad und die Herstellbarkeit der Folie schlechter. D.h. der Glanz wird in unerwünschtem Maße höher und die Folie neigt bei der Herstellung vermehrt zu Abrissen.

In einer günstigen Ausführungsform enthält die Folie neben dem Ethylenterephthalat-Homopolymer oder dem Ethylenterephthalat-Copolymer eine weitere polymere Komponente I. Diese Komponente I ist ein Copolymer, welches aus dem Kondensationsprodukt der folgenden Monomeren bzw. deren zur Bildung von Polyestern befähigten Derivaten besteht:

a) 65 bis 95 Mol-% Isophthalsäure;

b) 0 bis 30 Mol-% wenigstens einer aliphatische Dicarbonsäure mit der Formel $HOOC(CH_2)_nCOOH$, wobei n im Bereich von 1 bis 11 liegt;

c) 5 bis 15 Mol-% wenigstens eines Sulfomonomeren enthaltend eine Alkalimetallsulfonatgruppe an dem aromatischen Teil einer Dicarbonsäure;

d) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente I bildenden Monomeren. Zur ausführlichen Beschreibung der Komponente I siehe auch die **EP-A-0 144 878,** auf die hier ausdrücklich Bezug genommen wird.

Komponente I wird zweckmäßiger Weise als eine weitere polymere Komponente der Basisschicht (B) zugefügt, wobei der Gewichtsanteil bis zu 30 Gew.-% ausmachen kann. Die Komponente I bildet in diesem Fall mit den anderen in dieser Schicht vorhandenen Polymeren ein Blend oder eine Mischung oder aber auch ein Copolymeres durch Umesterung in der Extrusion.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepresste Formkörper kleiner Größe, z.B. linsen- oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die Komponente I und das entsprechende Polymere für die jeweilige Schicht jeweils für sich getrennt dem Extruder für die Basisschicht/andere Schicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Die erfindungsgemäße matte Folie wird in einer günstigen Ausführungsform durch den folgenden Satz von Parametern gekennzeichnet

a) die Rauigkeit der Folie, ausgedrückt durch ihren $R_a$-Wert, liegt im Bereich von 150 bis 1000 nm, bevorzugt 175 bis 950 nm und besonders bevorzugt 200 bis 900 nm. Kleinere Werte als 150 nm haben negative Auswirkungen auf den Mattheitsgrad der Oberfläche, größere Werte als 1000 nm beeinträchtigen die optischen Eigenschaften der Folie.

b) Der Messwert der Gasströmung liegt im Bereich 1 bis 50 s, bevorzugt im Bereich von 1 bis 45 s. Bei Werten oberhalb von 50 wird der Mattheitsgrad der Folie negativ beeinflusst.

Die Basisschicht (B) kann zusätzlich übliche Additive, wie beispielsweise Stabilisatoren enthalten. Als Stabilisatoren werden vorteilhaft beispielsweise Phosphorverbindungen, wie Phosphorsäure oder Phosphorsäureester, eingesetzt.

Die Dicke der erfindungsgemäßen Polyesterfolie kann innerhalb bestimmter Grenzen variieren. Sie liegt vorteilhaft im Bereich von 3 bis 350 $\mu$m, insbesondere von 4 bis 300 $\mu$m, vorzugsweise von 5 bis 250 $\mu$m.

Herstellungsverfahren:

Die Erfindung betrifft auch ein Verfahren zur Herstellung der erfindungsgemäßen Polyesterfolie nach dem an sich aus der Literatur bekannten Extrusionsverfahren.

Im Rahmen dieses Verfahrens wird so vorgegangen, dass die der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann gleichzeitig durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche (n) der Folie nach den bekannten Verfahren in-line beschichten. Die in-Line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Für die Herstellung einer Folie mit einem sehr hohen Mattgrad (= sehr niedrigem Glanz) und einer verbesserten Transparenz hat es sich als günstig erwiesen, wenn die planare Orientierung $\Delta p$ der Folie kleiner ist als $\Delta p = 0,168$, bevorzugt kleiner ist als $\Delta p = 0,164$ und ganz bevorzugt kleiner ist als $\Delta p = 0,160$. In diesem Fall wird insbesondere die Rauigkeit der Folie erhöht, was zu einer besonders niedrigem Glanz der Folie führt.

Es hat sich herausgestellt, dass die wesentlichen Einflussgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung der Folie von $\Delta p = 0,171$ mit dem Parametersatz $\lambda_{MD} = 4,8$ und $\lambda_{TD} = 4,0$, die Strecktemperaturen in Längs- und in Querrichtung $T_{MD} = 80$ bis 118 °C und $T_{TD} = 80$ bis 122 °C, so erhält man durch Erhöhung der Längsstrecktemperatur auf $T_{MD} = 80$ bis 125 °C oder durch Erhöhung der Querstrecktemperatur auf $T_{TD} = 80$ bis 135 °C oder durch Absenkung des Längsstreckverhältnisses auf $\lambda_{MD} = 4,0$ oder durch Absenkung des Querstreckverhältnisses auf $\lambda_{TD} = 3,6$ eine planare Orientierung $\Delta p$, die im gewünschten Bereich liegt. Die Folienbahngeschwindigkeit beträgt hierbei 300 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter geringfügig verschieden sein. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität wird so eingestellt, dass sich eine Oberflächenspannung im Bereich von über 45 mN/m einstellt.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkend. Es bietet sich an, diese zusätzliche Schichten über in-line-Beschichtung mittels wässriger Dispersionen nach dem Streckschritt in Längsrichtung und vor dem Streckschritt in Querrichtung auf die Folie aufzubringen.

Die erfindungsgemäße matte Folie zeichnet sich durch hervorragende optische Eigenschaften, d.h. einen niedrigen Glanz und eine hohe Transparenz, ein sehr gutes Handling und durch ein sehr gutes Verarbeitungsverhalten aus.

Daneben ist bei der Herstellung der Folie gewährleistet, dass das Verschnittmaterial (Regenerat) in einer Menge im Bereich von 20 bis 70 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die Folie eignet sich demnach ganz hervorragend für den Einsatz in der flexiblen Verpackung und zwar insbesondere dort, wo ihre hervorragenden optischen Eigenschaften und ihre gute Verarbeitbarkeit voll zum Tragen kommt. Dies ist insbesondere ihr Einsatz auf schnelllaufenden Verpackungsmaschinen. Die nachstehende Tabelle (Tabelle 1) fasst die wichtigsten erfindungsgemäßen Folieneigenschaften noch einmal auf einen Blick zusammen.

**Tabelle 1**

| | Bereich | | | | |
|---|---|---|---|---|---|
| | allgemein | bevorzugt | besonders bevorzugt | Einheit | Messmethode |
| Folieneigenschaften | | | | | |
| Glanz, 60° | < 80 | < 70 | < 60 | | DIN 67530 |
| COF | < 0,5 | < 0,45 | < 0,40 | | DIN 53375 |
| Mittlere Rauigkeit $R_a$ | 150 bis 1000 | 175 bis 950 | 200 bis 900 | nm | DIN 4768, Cut-off von 0,25 mm |
| Messwertbereich für die Gasströmung | 1-50 | 1-45 | | sec | intern |
| Trübung | < 90 | | | % | ASTM-D 1003-52 |
| Planare Orientierung (optional) | < 0,168 | < 0,164 | < 0,160 | | intern |

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, in Dichloressigsäure gemessen. Die intrinsische Viskosität (IV) berechnet sich wie folgt aus der Standardviskosität IV (DCE) = 6,907 x $10^{-4}$ SV (DCE) + 0,063096.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der so genannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1 °-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken.

|  |  |
|---|---|
| Messbedingungen: | |
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung Δp**

Die Bestimmung der planaren Orientierung erfolgt über die Messung der Brechungsindizes mit dem Abbe-Refraktometer nach der internen Betriebsvorschrift 24.

|  |  |
|---|---|
| Probenvorbereitung: | |
| Probengröße und Probenlänge: | 60 bis 100 mm |
| Probenbreite: | entspricht Prismenbreite von 10 mm |

Zur Bestimmung von $n_{MD}$ und $n_a$ (=$n_z$) muss die zu messende Probe aus der Folie ausgeschnitten werden, bei der die Laufkante der Probe exakt mit der TD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_a$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Messung des mittleren Durchmessers $d_{50}$**

Die Bestimmung des mittleren Durchmessers $d_{50}$ wurde mittels Laser auf einem Malvern Master Sizer nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.

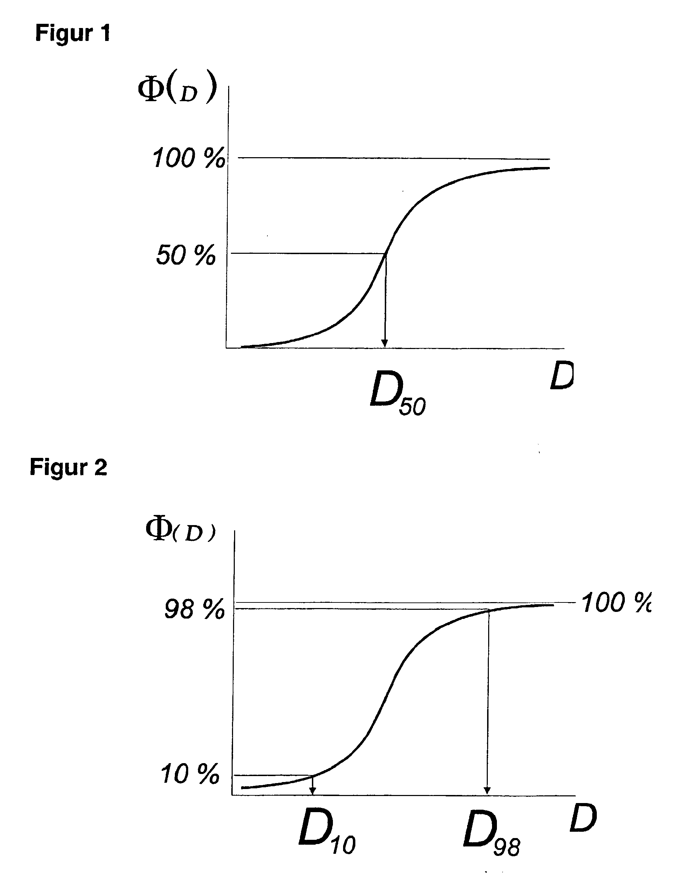

Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse sofort den gewünschten $d_{50}$-Wert. Wie dies zu verstehen ist, wird in **Figur 1** näher verdeutlicht.

**Messung der SPAN 98**

Die Bestimmung der SPAN 98 wurde mit dem gleichen Messgerät durchgeführt, wie oben bei der Bestimmung des mittleren Durchmessers $d_{50}$ beschrieben. Die SPAN 98 ist dabei wie folgt definiert:

$$SPAN98 = \frac{d_{98} - d_{10}}{d_{50}} .$$

Der Ermittlung von $d_{98}$ und $d_{10}$ wird wiederum die (relative) Summenkurve der Partikelgrößenverteilung zu Grunde gelegt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes der Summenkurve mit der Kurve liefert auf der Abszissenachse sofort den gewünschten $d_{10}$-Wert. Wie dies genau zu verstehen ist, wird in **Figur 2** näher verdeutlicht.

**Beispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt.

Dann wurde durch Extrusion und anschließende stufenweise Orientierung in Längs- und Querrichtung eine matte, einschichtige Folie mit einer Gesamtdicke von 23 $\mu$m hergestellt.

Folie, Mischung aus:

60 Gew.-%    Polyethylenterephthalat mit einem SV-Wert von 800

40 Gew.-%    Masterbatch aus 95 Gew.-% Polyethylenterephthalat und 5,0 Gew.-% Kieselsäurepartikel (®Sylysia 430 von der Fa. Fuji/Japan) mit einem $d_{50}$-Wert von 3,4 $\mu$m und einer SPAN 98 von 1,4.

Die Herstellungsbedingungen in den einzelnen Verfahrensschritten waren:

| | | | |
|---|---|---|---|
| Extrusion: | Temperaturen | 290 | °C |
| | Temperatur der Abzugswalze | 30 | °C |
| Längsstreckung: | Temperatur: | 80-126 | °C |
| | Längsstreckverhältnis: | 4,0 | |
| Querstreckung: | Temperatur: | 80-135 | °C |
| | Querstreckverhältnis | 4,0 | |

(fortgesetzt)

| Fixierung: | Temperatur: | 230 | °C |
|---|---|---|---|
| | Dauer: | 3 | s |

Die Folie hatte den geforderten niedrigen Glanz und die geforderte niedrige Trübung. Weiterhin zeigt die Folie das gewünschte Handling und das gewünschte Verarbeitungsverhalten. Der Folienaufbau und die erzielten Eigenschaften derart hergestellter Folien sind in den Tabellen 2 und 3 dargestellt.

**Beispiel 2**

Im Vergleich zu Beispiel 1 wurde die Zusammensetzung der Folie geändert: Folie, Mischung aus:

50 Gew.-%    Polyethylenterephthalat mit einem SV-Wert von 800

50 Gew.-%    Masterbatch aus 95 Gew.-% Polyethylenterephthalat und 5,0 Gew.-% Kieselsäurepartikel (®Sylysia 430 von der Fa. Fuji/Japan) mit einem $d_{50}$-Wert von 3,4 $\mu$m und einer SPAN 98 von 1,4.

Der Mattgrad der Folie hat sich hierdurch verbessert.

**Beispiel 3**

Im Vergleich zu Beispiel 2 wurde die Zusammensetzung der Folie geändert: Folie, Mischung aus:

40 Gew.-%    Polyethylenterephthalat mit einem SV-Wert von 800

60 Gew.-%    Masterbatch aus 95 Gew.-% Polyethylenterephthalat und 5,0 Gew.-% Kieselsäurepartikel (® Sylysia 430 von der Fa. Fuji/Japan) mit einem $d_{50}$-Wert von 3,4 $\mu$m und einer SPAN 98 von 1,4.

**Beispiel 4**

Im Vergleich zu Beispiel 3 wurde die Zusammensetzung der Folie geändert. Anstelle des Polyethylenterephthalat mit einem SV-Wert von 800 wurden jetzt 20 Gew.-% der polymeren Komponente I der Folie dazugegeben. Die Komponente I setzt sich dabei wie folgt zusammen:

a) 90 Mol-% Isophthalsäure;
b) 10 Mol-% Natrium-5-sulfoisophthalsäure.

Durch die Zuführung der Komponente I in die Folie wurde der Glanz der Folie weiter abgesenkt und die Transparenz der Folie verbessert.

Basisschicht (B), Mischung aus:

20 Gew.-%    Polyethylenterephthalat mit einem SV-Wert von 800

20 Gew.-%    Komponente I

60 Gew.-%    Masterbatch aus 95 Gew.-% Polyethylenterephthalat und 5,0 Gew.-% Kieselsäurepartikel (®Sylysia 430 von der Fa. Fuji/Japan) mit einem $d_{50}$-wert von 3,4 $\mu$m und einer SPAN 98 von 1,4.

**Vergleichsbeispiel 1**

Im Vergleich zu Beispiel 1 wurde jetzt die Folie mit einem Pigmentsystem entsprechend dem Stand der Technik gemäß der US-PS 3,154,461 rezepturiert. Der Mattgrad der Folie ist deutlich schlechter geworden.

Folie, Mischung aus:

40 Gew.-%    Polyethylenterephthalat mit einem SV-Wert von 800

60 Gew.-%    Masterbatch aus 95 Gew.-% Polyethylenterephthalat und 5,0 Gew.-% Kieselsäurepartikel mit einem $d_{50}$-Wert von 5,5 $\mu$m und einer SPAN 98 von 2,0

Tabelle 2

| Beispiel | Foliendicke μm | Verwendete Pigmente | mittlerer Pigment-Durchmesser in Folie [μm] | Span 98 | Pigmentkonzentration ppm |
|---|---|---|---|---|---|
| B 1 | 23 | Sylysia 430 | 3,4 | 1,4 | 20000 |
| B 2 | 23 | Sylysia 430 | 3,4 | 1,4 | 25000 |
| B 3 | 23 | Sylysia 430 | 3,4 | 1,4 | 30000 |
| B 4 | 23 | Sylysia 430 | 3,4 | 1,4 | 30000 |
| VB 1 | 23 | $SiO_2$ | 5,5 | 2,0 | 30000 |

Tabelle 3

| Beispiel | Reibung COF | Mittlere Rauigkeit $R_a$ [nm] | Messwerte für die Gasströmung [sec] | Δp | Glanz | Trübung [%] |
|---|---|---|---|---|---|---|
| B 1 | 0,44 | 230 | 12 | 0,164 | 35 | 65 |
| B 2 | 0,43 | 237 | 8 | 0,164 | 20 | 75 |
| B 3 | 0,41 | 250 | 6 | 0,164 | 15 | 80 |
| B 4 | 0,37 | 270 | 5 | 0,164 | 14 | 55 |
| VB 1 | 0,45 | 220 | 12 | 0,164 | 55 | 70 |

**Patentansprüche**

1. Matte, biaxial orientierte Polyesterfolie mit mindestens einer Basisschicht (B), die mindestens 70 Gew.-% thermoplastischen Polyester aus im wesentlichen Ethylenglykol- und Terephthalsäure-Einheiten enthält, **dadurch gekennzeichnet, dass** die Basisschicht (B) zusätzlich ein Pigmentsystem enthält, das die folgenden Merkmale besitzt:

    a) der mittlere Durchmesser der Pigmentkörner ($d_{50}$-Wert) liegt im Bereich von 2 bis 5 μm
    b) die Streuung der Verteilung der Korngröße der Pigmentkörner, ausgedrückt durch den SPAN 98, ist kleiner/gleich 1,9 und
    c) die Konzentration der Pigmentkörner liegt im Bereich 1,0 bis 10 Gew.-% wobei die Folie einen Glanz (gemessen nach DIN 67530 bei 60°) von < 80 aufweist

2. Matte Polyesterfolie nach Anspruch 1, **dadurch gekennzeichnet, dass** die Basisschicht (B) ein Pigmentsystem enthält, das bevorzugt einen mittleren Durchmesser ($d_{50}$-Wert) im Bereich von 2,1 bis 4,9 und besonders bevorzugt im Bereich von 2,2 bis 4,8 μm hat.

3. Matte Polyesterfolie nach Anspruch 1 oder 2, **dadurch gekennzeichnet, dass** die Basisschicht (B) ein Pigmentsystem enthält, das bevorzugt einen SPAN 98 von kleiner/gleich 1,8 und besonders bevorzugt von kleiner/gleich 1,7 hat.

4. Matte Polyesterfolie nach einem der Ansprüche 1 bis 3, **dadurch gekennzeichnet, dass** die Pigmentkonzentration in der Basisschicht (B) bevorzugt im Bereich von 1,1 bis 7,5 Gew.-% und besonders bevorzugt im Bereich von 1,2 bis 5,0 Gew.-% liegt.

5. Matte Polyesterfolie nach einem der Ansprüche 1 bis 4, **dadurch gekennzeichnet, dass** die Basisschicht (B) neben dem thermoplastischen Polyester zusätzlich eine weitere polymere Komponente I enthält, die ein Copolymer aus dem Kondensationsprodukt der folgenden Monomeren bzw. deren zur Bildung von Polyestern befähigten Derivaten ist:

a) 65 bis 95 Mol-% Isophthalsäure;

b) 0 bis 30 Mol-% wenigstens einer aliphatische Dicarbonsäure mit der Formel HOOC(CH$_2$)$_n$COOH, wobei n im Bereich von 1 bis 11 liegt;

c) 5 bis 15 Mol-% wenigstens eines Sulfomonomeren enthaltend eine Alkalimetallsulfonatgruppe an dem aromatischen Teil einer Dicarbonsäure;

d) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente I bildenden Monomeren.

6. Matte Polyesterfolie nach Anspruch 5, **dadurch gekennzeichnet, dass** sie Komponente I in einer Menge von bis zu 30 Gew.-% enthält, bezogen auf das Gesamtgewicht der Folie.

7. Matte Polyesterfolie nach einem der Ansprüche 1 bis 6, **dadurch gekennzeichnet, dass** sie eine Rauigkeit, ausgedrückt durch ihren R$_a$-Wert, im Bereich von 150 bis 1000 nm, bevorzugt 175 bis 950 nm und besonders bevorzugt 200 bis 900 nm, besitzt und dass der Messwert der Gasströmung im Bereich von 1 bis 50 s, bevorzugt im Bereich von 1 bis 45 s, liegt.

8. Matte Polyesterfolie nach einem der Ansprüche 1 bis 7, **dadurch gekennzeichnet, dass** sie eine Dicke im Bereich von 3 bis 350 $\mu$m, insbesondere von 4 bis 300 $\mu$m, vorzugsweise von 5 bis 250 $\mu$m, besitzt.

9. Verfahren zum Herstellen einer matten Polyesterfolie nach einem der Ansprüche 1 bis 8 nach dem Extrusionsverfahren, bei dem die der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt, die biaxial gestreckte Folie thermofixiert und gegebenenfalls an der zur Behandlung vorgesehenen Oberflächenschicht noch corona- oder flammbehandelt wird, **dadurch gekennzeichnet, dass** die Längsstreckung bei einer Temperatur im Bereich von 80 bis 130 °C und die Querstreckung im Bereich von 90 bis 150 °C durchgeführt wird und dass das Längsstreckverhältnis auf einen Bereich von 2,5:1 bis 6:1, bevorzugt von 3:1 bis 5,5:1, uns das Querstreckverhältnis auf einen Bereich von 3,0:1 bis 5,0:1, bevorzugt von 3,5:1 bis 4,5:1, eingestellt wird.

10. Verfahren nach Anspruch 9, **dadurch gekennzeichnet, dass** die Streckparameter so eingestellt werden, dass die planare Orientierung $\Delta$p der Folie kleiner ist als 0,168, bevorzugt kleiner ist als 0,164, ganz bevorzugt kleiner ist als 0,160.

11. Verfahren nach Anspruch 9 oder 10, **dadurch gekennzeichnet, dass** der Folie bei der Herstellung Verschnittmaterial, das während der Herstellung anfällt, als Regenerat in einer Menge im Bereich von bis zu 70 Gew.-%, bezogen auf das Gesamtgewicht der Folie, wieder bei der Extrusion zugeführt wird.

12. Verwendung einer Folie nach einem der Ansprüche 1 bis 8 für den Einsatz in der flexiblen Verpackung, insbesondere auf schnelllaufenden Verpackungsmaschinen.

**Claims**

1. A matt, biaxially oriented polyester film with at least one base layer (B) which comprises at least 70% by weight of thermoplastic polyester essentially consisting of ethylene glycol units and of terephthalic acid units, wherein the base layer (B) also comprises a pigment system which has the following features:

a) the median diameter of the pigment grains (d$_{50}$) is in the range from 2 to 5 $\mu$m

b) the scattering of the distribution of the grain size of the pigment grains, expressed via the SPAN 98, is less than or equal to 1.9, and

c) the concentration of the pigment grains is in the range from 1.0 to 10% by weight, where the gloss of the film (measured to DIN 67350 at 60°) is < 80.

2. The matt polyesterfilm as claimed in claim 1, wherein the base layer (B) comprises a pigment system which preferably has a median diameter (d$_{50}$) in the range from 2.1 to 4.9 $\mu$m and particularly preferably in the range from 2.2 to 4.8 $\mu$m.

3. The matt polyesterfilm as claimed in claim 1 or 2, wherein the base layer (B) comprises a pigment system which preferably has a SPAN 98 less than or equal to 1.8 and particularly preferably less than or equal to 1.7.

4. The matt polyester film as claimed in any of claims 1 to 3; wherein the pigment concentration in the base layer (B) is preferably in the range from 1.1 to 7.5% by weight and particularly preferably in the range from 1.2 to 5.0% by weight.

5. The matt polyester film as claimed in any of claims 1 to 4, wherein the base layer (B) also comprises, besides the thermoplastic polyester, another polymeric component I which is a copolymer composed of the condensation product of the following monomers or, respectively, their derivatives capable of forming polyesters:

a) from 65 to 95 mol% of isophthalic acid;
b) from 0 to 30 mol% of at least one aliphatic dicarboxylic acid having the formula $HOOC(CH_2)_nCOOH$, where n is in the range from 1 to 11;
c) from 5 to 15 mol% of at least one sulfomonomer containing an alkali metal sulfonate group on the aromatic moiety of a dicarboxylic acid;
d) a copolymerizable aliphatic or cycloaliphatic glycol having from 2 to 11 carbon atoms, in the stoichiometric amount necessary to form 100 mol% of condensate;
where each of the percentages is based on the total amount of monomers forming component I.

6. The matt polyester film as claimed in claim 5, which comprises up to 30% by weight of component I, based on the total weight of the film.

7. The matt polyester film as claimed in any of claims 1 to 6, which has a roughness, expressed via its $R_a$ value, in the range from 150 to 1000 nm, preferably from 175 to 950 nm and particularly preferably from 200 to 900 nm, and wherein the value measured for gas flow is in the range from 1 to 50 s, preferably in the range from 1 to 45 s.

8. The matt polyester film as claimed in any of claims 1 to 7, which has a thickness in the range from 3 to 350 $\mu$m, in particular from 4 to 300 $\mu$m, preferably from 5 to 250 $\mu$m.

9. A process for producing a matt polyesterfilm as claimed in any of claims 1 to 8 by extrusion, in which the melt corresponding to the film is extruded through a flat-film die, the resultant film is drawn off for solidification on one or more rollers, the film is then biaxially stretched, and the biaxially stretched film is heat-set and, where appropriate, also corona-orflametreated on the surface intended for treatment, which comprises carrying out the longitudinal stretching at a temperature in the range from 80 to 130°C and the transverse stretching in the range from 90 to 150°C, and comprises setting a longitudinal stretching ratio in the range from 2.5:1 to 6:1, preferably from 3:1 to 5.5:1, and setting a transverse stretching ratio in the range from 3.0:1 to 5.0:1, preferably from 3.5:1 to 4.5:1.

10. The process as claimed in claim 9, wherein the stretching parameters set are such that the planar orientation Δp of the film is less than 0.168, preferably less than 0.164, very preferably less than 0.160.

11. The process as claimed in claim 9 or 10, wherein cut material arising during the process to produce the film is reintroduced to the extrusion process as regrind in amounts in the range up to 70% by weight, based on the total weight of the film.

12. The use of a film as claimed in any of claims 1 to 8, in flexible packaging, in particular on high-speed packaging machinery.

**Revendications**

1. Film polyester mat, orienté biaxialement ayant au moins une couche de base (B), qui contient au moins 70 % en poids de polyester thermoplastique constitué sensiblement de motifs d'éthylène glycol et d'acide téréphtalique, **caractérisé en ce que** la couche de base (B) contient en plus un système de pigments, qui possède les caractéristiques suivantes :

a) le diamètre moyen des grains de pigment (valeur $d_{50}$) se situe dans la plage allant de 2 à 5 $\mu$m,
b) la dispersion de la répartition granulométrique des grains de pigments, exprimée par l'indice SPAN 98, est inférieure/égale à 1,9 et
c) la concentration des grains de pigments se situe dans la plage allant de 1,0 à 10 % en poids, le film présentant une brillance (mesurée d'après la norme DIN 67530 à 60°) < 80.

2. Film polyester mat selon la revendication 1, **caractérisé en ce que** la couche de base (B) contient un système de pigments, qui a un diamètre moyen (valeur $d_{50}$) dans la plage allant de 2,1 à 4,9, et particulièrement préférentiellement dans la plage allant de 2,2 à 4,8 $\mu$m.

3. Film polyester mat selon la revendication 1 ou 2, **caractérisé en ce que** la couche de base (B) contient un système de pigments, qui a de préférence un indice SPAN 98 inférieur/égal à 1,8 et particulièrement préférentiellement inférieur/égal à 1,7.

4. Film polyester mat selon l'une des revendications 1 à 3, **caractérisé en ce que** la concentration en pigments dans la couche de base (B) se situe de préférence dans la plage allant de 1,1 à 7,5 % en poids et particulièrement préférentiellement dans la plage allant de 1,2 à 5,0 % en poids.

5. Film polyester mat selon l'une des revendications 1 à 4, **caractérisé en ce que** la couche de base (B) contient, hormis le polyester thermoplastique, en plus un autre composant polymère I, qui est un copolymère issu du produit de condensation des monomères suivants ou de leurs dérivés susceptibles de former des polyesters :

   a) 65 à 95 % en moles d'acide isophtalique ;
   b) 0 à 30 % en moles d'au moins un acide dicarboxylique aliphatique de formule HOOC(CH$_2$)$_n$COOH, dans laquelle n se situe dans la plage allant de 1 à 11 ;
   c) 5 à 15 % en moles d'au moins un sulfomonomère contenant un groupe sulfonate de métal alcalin sur la partie aromatique d'un acide dicarboxylique ;
   d) la quantité stoechiométrique nécessaire à la formation de 100 % en moles de condensé, d'un glycol aliphatique ou cycloaliphatique copolymérisable ayant de 2 à 11 atomes de carbone ;

   où les indications de pourcentage sont respectivement rapportées sur la quantité totale des monomères formant le composant I.

6. Film polyester mat selon la revendication 5, **caractérisé en ce qu'**il contient le composant I en une quantité allant jusqu'à 30 % en poids, par rapport au poids total du film.

7. Film polyester mat selon l'une des revendications 1 à 6, **caractérisé en ce qu'**il possède une rugosité, exprimée par sa valeur $R_a$, dans la plage allant de 150 à 1000 nm, de préférence de 175 à 950 nm et particulièrement préférentiellement de 200 à 900 nm, et **en ce que** la valeur de mesure du courant gazeux se situe dans la plage de 1 à 50 s, de préférence dans la plage de 1 à 45 s.

8. Film polyester mat selon l'une des revendications 1 à 7, **caractérisé en ce qu'**il possède une épaisseur dans la plage de 3 à 350 $\mu$m, en particulier de 4 à 300 $\mu$m, de préférence de 5 à 250 $\mu$m.

9. Procédé de fabrication d'un film polyester mat selon l'une des revendications 1 à 8, d'après le procédé d'extrusion dans lequel la matière fondue correspondant au film est extrudée à travers une filière plate, le film ainsi obtenu est étiré sur un ou plusieurs cylindres aux fins de solidification, le film est ensuite étiré biaxialement, le film étiré biaxialement est thermofixé et le cas échéant également traité corona ou traité à la flamme sur la couche de surface prévue pour le traitement, **caractérisé en ce que** l'étirement longitudinal s'effectue à une température située dans la plage de 80 à 130°C et que l'étirement transversal s'effectue dans la plage de 90 à 150°C et **en ce que** le rapport d'étirement longitudinal est ajusté à une plage de 2,5/1 à 6/1, de préférence de 3/1 à 5,5/1, le rapport d'étirement transversal à une plage de 3,0/1 à 5,0/1, de préférence de 3,5/1 à 4.5/1.

10. Procédé selon la revendication 9, **caractérisé en ce que** les paramètres d'étirement sont ainsi ajustés que l'orientation planaire $\Delta$p du film est inférieure à 0,168, de préférence inférieure à 0,164, tout préférentiellement inférieure à 0,160.

11. Procédé selon la revendication 9 ou 10, **caractérisé en ce que** des chutes, obtenues au cours de la fabrication, sont recyclées vers l'extrusion, à titre de produit régénérat, en une quantité dans la plage allant jusqu'à 70 % en poids, par rapport au poids total du film.

12. Utilisation d'un film selon l'une des revendications 1 à 8 pour la mise en oeuvre dans l'emballage flexible, en particulier sur des machines d'emballage rapides.

**Figur 1**

**Figur 2**